# FASCICULE DE BREVET EUROPEEN

(11) **EP 3 874 476 B1**
(45) Date de publication et mention de la délivrance du brevet: **29.04.2026**
(21) Numéro de dépôt: 19831978.2
(22) Date de dépôt: 29.10.2019
(51) Int. Cl.: G07D 7/2033, G07D 7/207

(54) **PROCÉDÉ DE DETERMINATION DE L'AUTHENTICITÉ D'UN DOCUMENT ET DISPOSITIF POUR LA MISE EN OEUVRE D'UN TEL PROCÉDÉ**
VERFAHREN ZUR ECHTHEITSPRÜFUNG EINES DOKUMENTS UND VORRICHTUNG ZUR DURCHFÜHRUNG EINES SOLCHEN VERFAHRENS
METHOD FOR ASCERTAINING THE AUTHENTICITY OF A DOCUMENT, AND DEVICE FOR CARRYING OUT SUCH A METHOD

(30) Priorité: 31.10.2018 FR 1871348
(43) Date de publication de la demande: 08.09.2021
(73) Titulaire: Cypheme, 75015 Paris (FR)
(72) Inventeur: GARCIA-COTTE, Hugo, 77650 Savins (FR)
(74) Mandataire: Bonnet, Michel
(86) Numéro de dépôt international: PCT/EP2019/025369
(87) Numéro de publication internationale: WO 2020/088797

(56) Documents cités:
- EP-A2- 2 724 332
- EP-B1- 2 724 332
- GB-A- 2 304 077

## Description

### Domaine technique

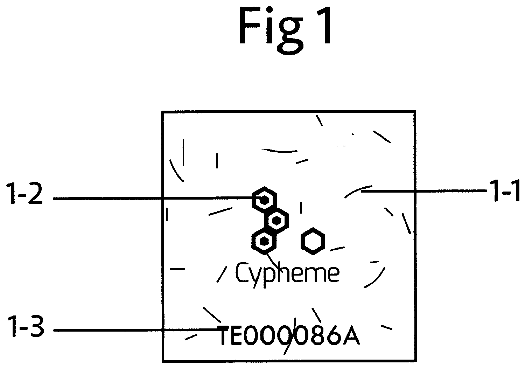

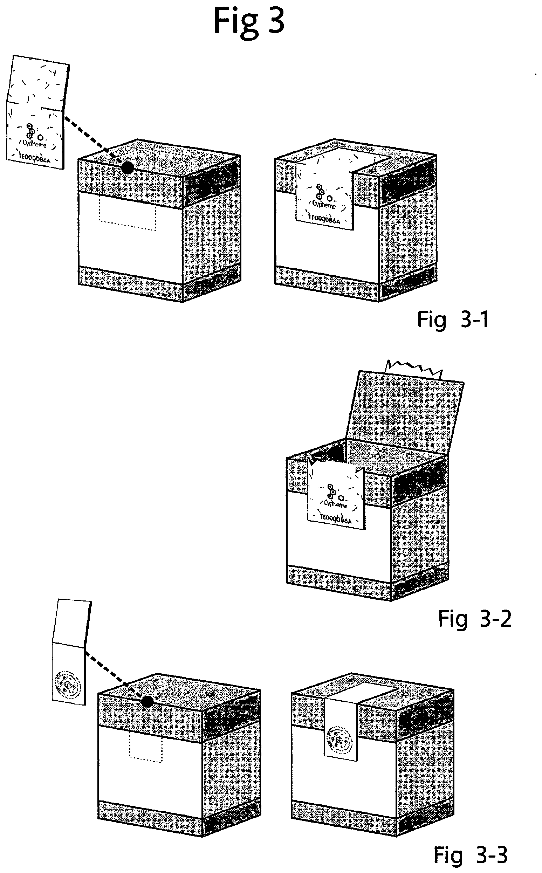

La présente invention a pour objet un élément de sécurité plus difficile à reproduire que les éléments de sécurité traditionnels et pourtant très simple à authentifier avec un simple smartphone sans accessoire et ce, dans tout type de conditions d'éclairages sous différents angles. Il est basé sur l'analyse de microstructure de perturbateurs par une intelligence artificielle. De manière plus précise, l'élément de sécurité est un marquage ou une étiquette spéciale apposé sur un emballage ou un produit directement, avec ou sans identifiant (Fig 1-3). L'invention concerne également un procédé de détermination de l'authenticité d'un tel élément ainsi qu'un dispositif pour la mise en œuvre d'un tel procédé. L'utilisateur est amené à en prendre une photo, puis à l'envoyer à un logiciel qui visualise l'empreinte digitale de l'étiquette ou du marquage et peut ainsi trancher sur l'authenticité du produit en moins d'une minute. Grâce à l'algorithme du logiciel muni d'un algorithme de reconnaissance incluant des réseaux neuronaux (« deep learning »), la position des perturbateurs aléatoires (Fig 1-1) est lue sur l'étiquette ou le marquage et comparée à celle correspondante scannée dans un cloud ou une blockchain.

La zone devant être analysée est localisée grâce à des points avec des particularités (Fig 1-2). L'invention est applicable à tous les produits susceptibles d'être contrefaits, y compris les billets de banque, les pièces d'identité, les diplômes et tous autres documents et a donc pour effet de renforcer la lutte contre la contrefaçon.

Jusqu'à présent, l'analyse de l'emballage requiert l'usage d'un microscope infrarouge et non pas tout type de caméra de smartphone comme dans la présente invention avec un maniement opératoire facile et adapté à l'utilisateur final.

### Etat de la technique antérieure

On connaît de l'état de la technique des procédés utilisés pour lutter contre le fléau de la contrefaçon : l'hologramme, la RFID, le QR Code ou signature numérique. Il suffit d'un peu de moyens pour reproduire un hologramme, une puce RFID ou un QR code. La présente invention est impossible à reproduire : elle présente en conséquence une sécurité supérieure par rapport aux inventions protégées par des brevets antérieurs.

EP 2 724 332 A2 divulgue un procédé d'authentification dans lequel des motifs aléatoires (signature) sont détectés et comparés à des motifs préalablement enregistrés. S'agissant du brevet WO 2015052181, déposé le 16 avril 2015 par la Banque de France, il utilise un film interférentiel difficile à reproduire mais sans créer une empreinte unique pour chaque billet, le film étant le même pour tous les billets. Cette solution est statique.

S'agissant du brevet WO 2012/136902 déposé par M. Franck Guigan, ayant pour date de dépôt le 19 mars 2012 et pour date de publication internationale sous PCT le 11 octobre 2012, il décrit un code-barres de sécurité, le marquage reposant sur une distribution aléatoire de particules sous forme de points, de couleurs -encres ou non -, qui sont des éléments d'optique perturbant la lumière dits perturbateurs. Pour établir l'authenticité d'un objet protégé par ce code, on compare la description faite après son impression, stockée dans une base de données, avec une nouvelle description résultant d'au moins deux acquisitions, l'une dans les mêmes conditions, et l'autre en changeant le point de vue défini en trois dimensions, et /ou l'éclairage. Les marqueurs peuvent être également des paillettes dans un vernis dont la tension est une tâche aléatoire et irrégulière. Un réseau de lentilles au-dessus du marqueur permet de les voir au travers.

Le principal problème est que la position de la prise de vue est spécifiée lors de la production du dispositif, la sécurité reposant sur la forme 3D des perturbateurs, la et les positions de prise de vue sont importantes. Ainsi l'utilisateur doit disposer parfaitement son appareil d'acquisition. Ce qui est difficile à réaliser dans des conditions réelles. Il est également nécessaire de prendre deux prises de vues, ce qui complique l'opération de prise de vue. Le procédé nécessite également plusieurs couches d'impressions dont un réseau de lentilles. Ce qui complique la production dudit dispositif et le rend donc onéreux.

Dans ce contexte, il a été constaté que, jusqu'à présent, l'authentification nécessite soit un outil dédié, soit un procédé complexe de prise de vue avec un smartphone.

### Présentation de l'invention

Dans la présente invention, contrairement à l'état antérieur de la technique, la sécurité est parfaite. L'utilisation est également très simple car ne dépendant ni d'un outil particulier ni d'une prise de vue parfaite.

La présente invention comporte trois procédés : dans un premier procédé, l'empreinte est unique avec la position aléatoire de fibres colorées (Fig 1-1) ou de toutes autres formes de perturbateurs. Elle n'est pas en trois dimensions. Un pattern aléatoire différent signalise la contrefaçon ; il est indépendant de l'angle des prises de vues qui sont faites sans lentilles.

Ce procédé d'authentification consiste ainsi à établir une description dite ultérieure d'un dispositif d'authentification comportant un ou plusieurs éléments visibles ayant une forme et /ou une position aléatoire et à comparer cette description avec une description dite originale dudit dispositif d'authentification.

L'élément de sécurité sous forme d'étiquette ou de marquage comprend simultanément d'une part, un identifiant unique pour un produit ou pour un ensemble de produits ou master d'impression sur une plaque d'une imprimante statique de toutes catégories pouvant imprimer par rotation de multiples produits avec le même identifiant, d'autre part des perturbateurs intrinsèques, notamment au papier ou plastic spéciaux, disposés et de formes aléatoires, visibles quel que soit l'angle de prises de vues, par exemple la position de fibres de couleurs dans un papier spécial, et un algorithme qui reconnaît sans difficulté et quel que soit l'angle de prise de vue, le motif imprimé et ses composants aléatoires dans une zone devant être analysée et localisée grâce à des points aux particularités géométriques, la reconnaissance à l'œil nu étant possible mais plus difficile et peu fiable.

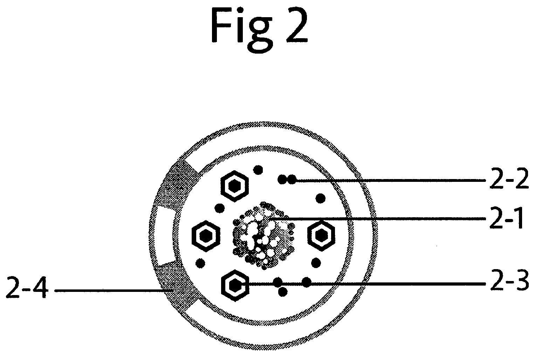

Dans un deuxième procédé, il y a un ajout d'un produit chimique avec une composition très spécifique, un vernis (Fig 2-1), qui se substitue aux fibres, qui se solidifie sous forme de tâches aléatoires en deux dimensions et auquel sont inclus des pigments non reproductibles avec une imprimante digitale, ce qui fait obstacle à une éventuelle copie des éléments de sécurité. Ces pigments sont fluorescents, avec des couleurs hors du spectre quadrichromique (cyan, magenta, jaune, noir) (CMYK), réfléchissants, thermochromiques ou à couleurs changeantes. Cet ensemble assure la perfection et la fiabilité totale de la reconnaissance de l'impression.

L'élément de sécurité, avec ou sans identifiant, à la place du papier spécial, comprend simultanément une couche de vernis chimique spécifique, qui se solidifie et prend, en séchant, une forme aléatoire de tâches en deux dimensions non reproductible, et l'inclusion de pigments ou paillettes non disponibles dans les imprimantes digitales, ce qui fait obstacle à une éventuelle copie des éléments de sécurité, les pigments étant fluorescents, avec des couleurs hors du spectre quadrichromique ou de tous autres spectres disponibles dans les imprimantes digitales, réfléchissants ou à couleurs changeantes, avec le cas échéant une impression supplémentaire nécessitant ou non l'utilisation d'une seconde machine et donc soumis à une erreur de registre aléatoire, l'ensemble assurant la perfection de la reconnaissance de l'impression unique.

Dans un troisième procédé, à la place du papier spécial ou du vernis à forme aléatoire, il y a un ajout d'une encre ou d'une peinture à forme statique ou variable incluant des pigments ou paillettes, ce qui fait obstacle à une éventuelle copie de l'élément de sécurité, les pigments étant fluorescents, avec des couleurs hors du spectre quadrichromique ou hors du spectre pantone, réfléchissantes, changeantes et/ou résultant d'un mélange complexe de couleurs, l'ensemble assurant la perfection de la reconnaissance de l'encre ou de la peinture.

Par le dispositif de l'invention, le premier procédé utilisant notamment un papier ou plastic spéciaux et toutes catégories d'imprimantes, le deuxième procédé utilisant une encre spéciale et les imprimantes offset, flexo ou rotogravure, l'utilisateur est amené à prendre une ou plusieurs photos avec un smartphone, avec ou sans flash, puis à l'envoyer à un dispositif algorithmique, comprenant un logiciel qui visualise l'empreinte digitale unique du papier spécial ou du vernis, ainsi que les pigments ou paillettes non disponibles dans les empreintes digitales, permettant de détecter l'authenticité dudit élément de sécurité en le comparant quasi instantanément avec la description originale stockée dans un cloud ou une blockchain, ledit logiciel ayant soit une connexion directe au cloud ou à la blockchain, soit une connexion par messagerie "chat box" dédiée au cloud ou à la blockchain.

La présente invention permet ainsi de vérifier de manière quasi-instantanée et très précise l'authenticité d'un document ou d'un produit. La sécurité est maximale, le procédé de production est peu cher et l'authentification est simple.

Avec le troisième procédé, l'utilisateur est amené à prendre une ou plusieurs photographies avec un smartphone, avec ou sans flash, puis à l'envoyer à un dispositif comprenant un logiciel qui visualise les couleurs et détermine, notamment grâce à des réseaux neuronaux si ces couleurs correspondent à l'encre ou à la peinture de la description originale, stockée dans un smartphone ou dans un cloud, ledit logiciel ayant soit une connexion directe au cloud ou à la blockchain, soit une connexion par messagerie « chatbot » dédiée au cloud ou à la blockchain.

### Description des dessins

Légende Fig 1 :
   1-1 : Fibres de couleurs de position aléatoire (perturbateurs aléatoires)
   1-2 : Repères de positionnement (points aux particularités géométriques)
   1-3 : Identifiant unique
Légende Fig 2 :
   2-1 : Vernis spécial, forme aléatoire
   2-2 : Identifiant unique
   2-3 : Repère de positionnement
   2-4 : Impression supplémentaire
   Les schémas représentent des cas d'utilisation
Fig 3-1 & 3-2 : Autocollant papier qui scelle une boite
Fig 3-3 : Autocollant vernis qui scelle une boite

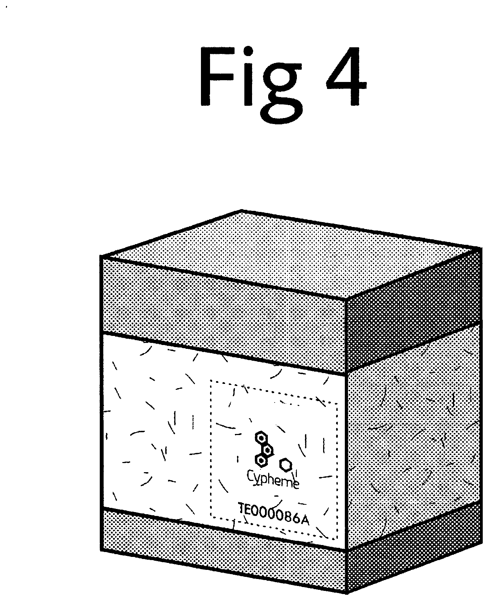

Fig 4 : Emballage cartonné incorporant la technologie

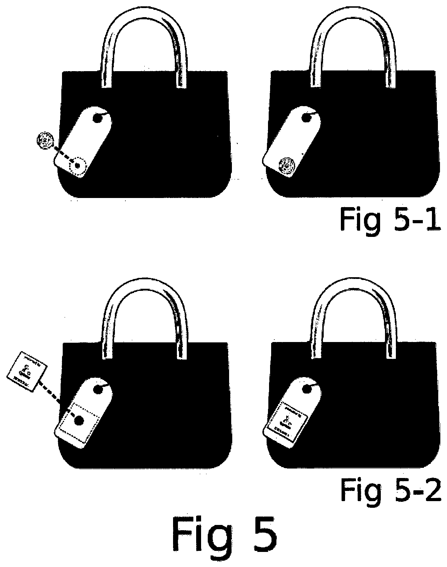

Fig 5 : Autocollant vernis ou papier rajouté sur le tag d'un sac à main

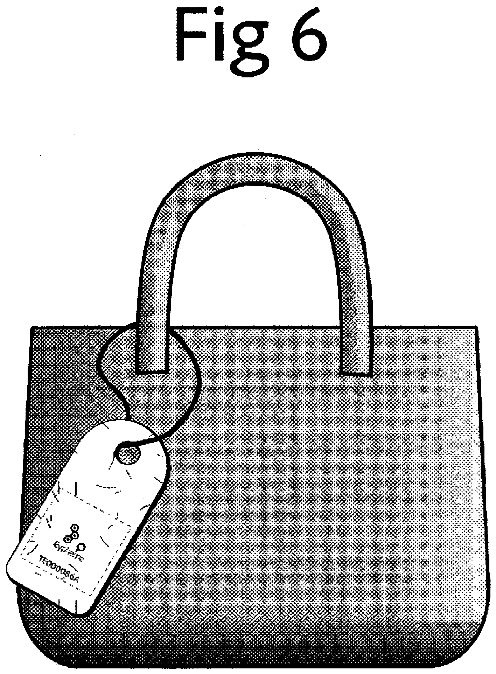

Fig 6 : Tag de sac incorporant la technologie papier

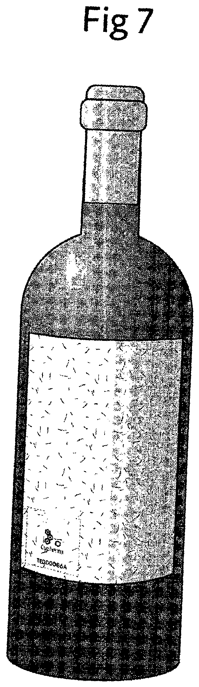

Fig 7 : Label de vin incorporant la technologie papier

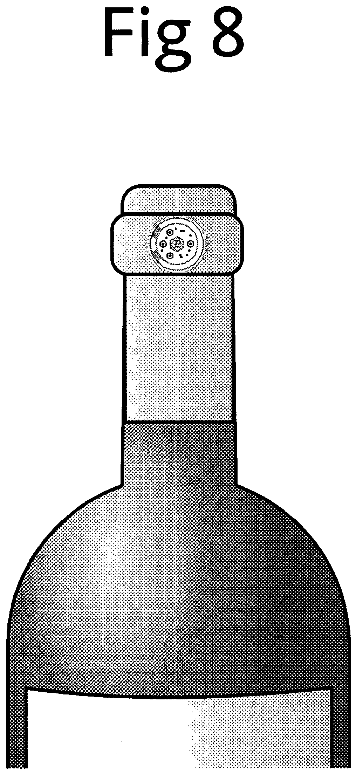

Fig 8 : Capsule de bouteille de vin incorporant le technologie vernis

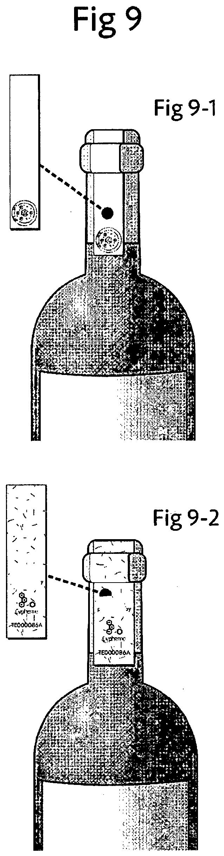

Fig 9 : Autocollant vernis ou papier sur une bouteille de vin

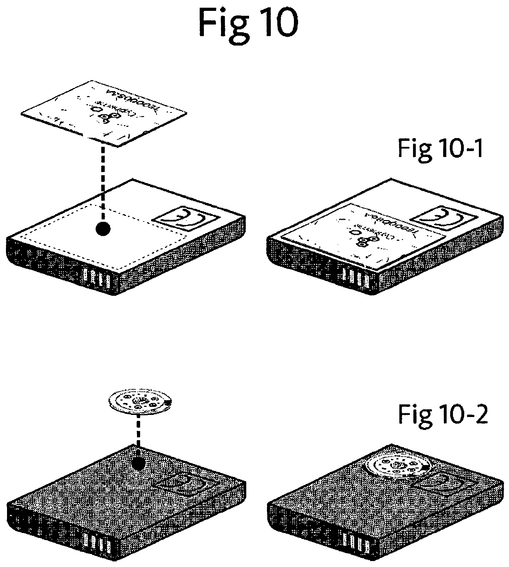

Fig 10 : Autocollant vernis ou papier sur un produit (batterie de téléphone)

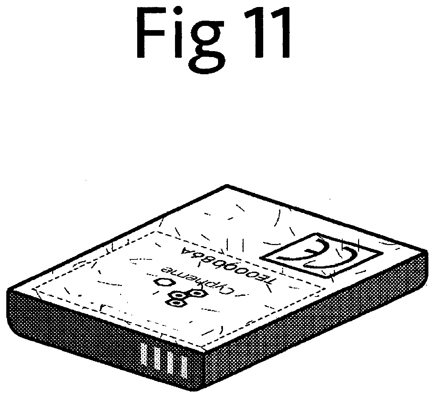

Fig 11 : Produit incorporant la technologie papier

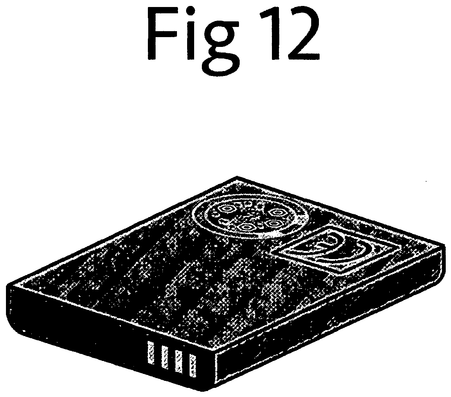

Fig 12 : Produit incorporant la technologie vernis

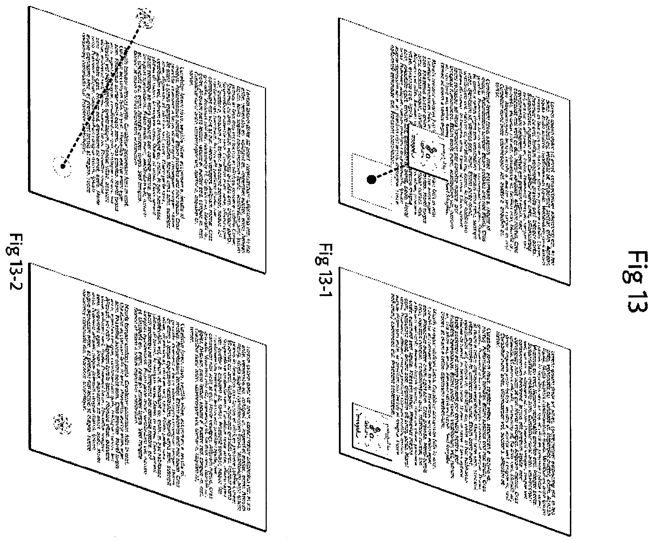

Fig 13 : Autocollant vernis ou papier sur un document

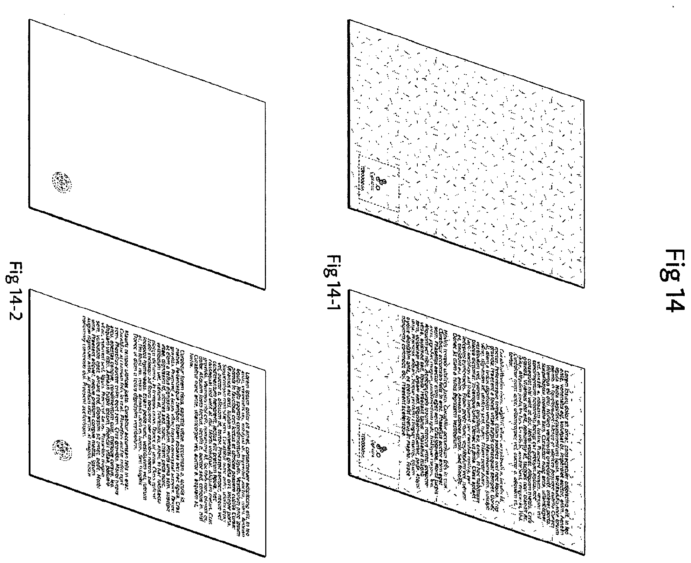

Fig 14 : Document incorporant la technologie papier ou vernis

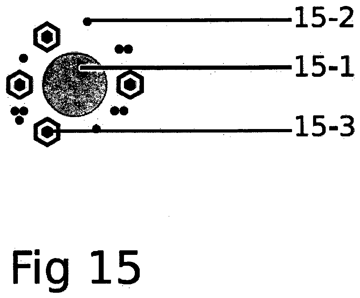

Fig 15-1 : Encre spéciale, forme statique, couleur hors du spectre Pantone
Fig 15-2 : Identifiant unique ou statique, encre normale
Fig 15-3 : Repère de positionnement, encre normale

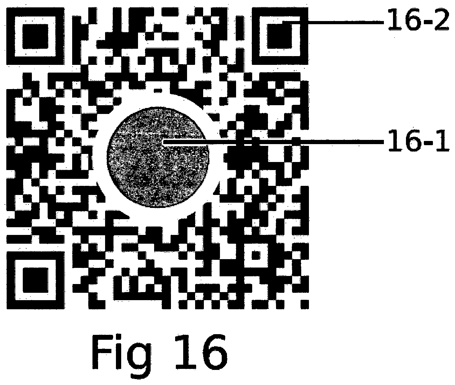

Fig 16 : QR code statique ou variable avec en supplément une partie statique en encre de couleur hors du spectre Pantone

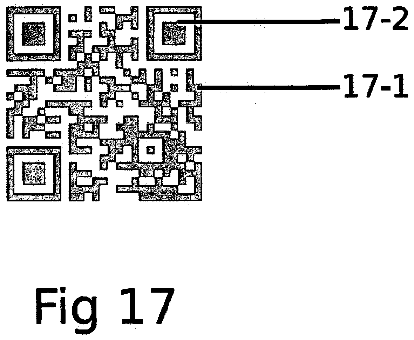

Fig 17 : QR code statique ou variable imprimé avec une ou plusieurs couleurs d'une encre spéciale hors du spectre Pantone

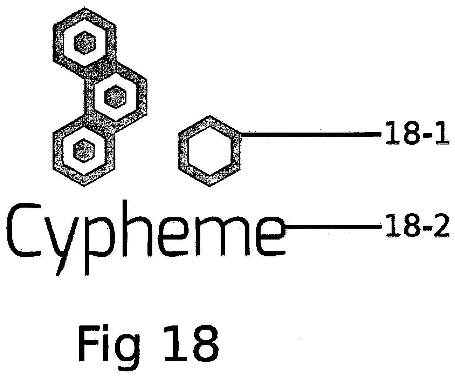

Fig 18 : Logo imprimé partiellement avec une encre normale et partiellement avec une encre hors du spectre pantone

## Revendications

1. Procédé d'authentification consistant à établir une description dite ultérieure d'un dispositif d'authentification comportant un ou plusieurs éléments visibles ayant une forme et /ou une position aléatoire et à comparer cette description avec une description dite originale dudit dispositif d'authentification,
dans lequel l'élément de sécurité sous la forme d'un motif imprimé sur un support d'étiquette ou de marquage apposé sur un produit ou sur un emballage de ce produit comprend simultanément :
- un identifiant unique (1-3, 2-2) pour le produit ou pour un ensemble de produits ou master d'impression sur une plaque d'une imprimante statique de toutes catégories pouvant imprimer par rotation de multiples produits avec le même identifiant,
- des composantes aléatoires (1-1, 2-1) formées de perturbateurs intrinsèques au motif, disposés de façon bidimensionnelle sur le support d'étiquette ou de marquage et de formes aléatoires bidimensionnelles sur le support d'étiquette ou de marquage, ces composantes aléatoires bidimensionnelles étant spécifiquement conçues pour être visibles sur le support d'étiquette ou de marquage indépendamment de l' angle de prise de vue, et
- des repères de positionnement (1-2, 2-3) aux particularités géométriques, localisant une zone devant être analysée dans laquelle se trouvent les perturbateurs intrinsèques,
et en ce que le procédé exécute un algorithme qui reconnaît, indépendamment de l'angle de prise de vue, le motif imprimé et ses composants aléatoires dans la zone devant être analysée et localisée grâce aux repères de positionnement aux particularités géométriques.

2. Procédé d'authentification selon la revendication 1, dans lequel les perturbateurs sont intrinsèques à un papier ou à un plastique.

3. Procédé d'authentification selon la revendication 1 ou 2, dans lequel les composantes aléatoires de l'élément de sécurité comprennent des fibres colorées positionnées aléatoirement.

4. Procédé d'authentification selon la revendication 1 ou 2, dans lequel les composantes aléatoires de l'élément de sécurité comprennent une couche de vernis chimique spécifique, qui se solidifie et prend, en séchant, une forme aléatoire de tâches en deux dimensions et dans lequel sont inclus des pigments non reproductibles avec une imprimante digitale.

5. Procédé d'authentification selon la revendication 4, dans lequel les pigments sont fluorescents, avec des couleurs hors du spectre quadrichromique, réfléchissants, thermochromiques ou à couleurs changeantes.

6. Procédé d'authentification selon la revendication 1 ou 2, dans lequel les composantes aléatoires de l'élément de sécurité comprennent une encre ou une peinture à forme statique ou variable, avec des couleurs hors du spectre quadrichromique ou hors du spectre pantone, réfléchissantes, changeantes et/ou résultant d'un mélange complexe de couleurs, l'ensemble assurant la perfection de la reconnaissance de l'encre ou de la peinture.

7. Dispositif d'authentification comportant :
- des moyens de mise en œuvre d'un procédé d'authentification selon l'une quelconque des revendications 1 à 6, et
- un dispositif, apte à recevoir une ou plusieurs photos préalablement prise(s) par un utilisateur avec un smartphone, avec ou sans flash, comprenant un logiciel qui visualise les composantes aléatoires de l'élément de sécurité, permettant de détecter l'authenticité dudit élément de sécurité en le comparant quasi instantanément avec la description originale stockée dans un smartphone ou dans un cloud, ledit logiciel ayant soit une connexion directe au cloud, soit une connexion par messagerie "chat box" dédiée au cloud.

8. Dispositif d'authentification selon la revendication 7, dans lequel les composantes aléatoires de l'élément de sécurité comprennent une encre ou une peinture à forme statique ou variable, avec des couleurs hors du spectre quadrichromique ou hors du spectre pantone, réfléchissantes, changeantes et/ou résultant d'un mélange complexe de couleurs, l'ensemble assurant la perfection de la reconnaissance de l'encre ou de la peinture et le logiciel est apte à visualiser les couleurs de l'encre ou de la peinture et détermine, notamment grâce à des réseaux neuronaux, si ces couleurs correspondent à l'encre ou à la peinture de la description originale.

## Patentansprüche

1. Authentifizierungsverfahren, das darin besteht, eine spätere Beschreibung einer Authentifizierungsvorrichtung zu erstellen, die ein oder mehrere sichtbare Elemente aufweist, die eine zufällige Form und/oder Position haben, und diese Beschreibung mit einer Originalbeschreibung der Authentifizierungsvorrichtung zu vergleichen, wobei das Sicherheitselement in Form eines Musters, das auf einen Etiketten- oder Kennzeichnungsträger gedruckt und auf einem Produkt oder einer Verpackung dieses Produkts angebracht ist, gleichzeitig Folgendes umfasst:
- eine eindeutige Kennung (1-3, 2-2) für das Produkt oder für eine Gruppe von Produkten oder einen Druckmaster auf einer Platte eines statischen Druckers aller Kategorien, der durch Rotation mehrere Produkte mit derselben Kennung drucken kann,
- zufällige Komponenten (1-1, 2-1), die aus dem Muster inhärenten Störfaktoren bestehen, die zweidimensional auf dem Etiketten- oder Kennzeichnungsträger angeordnet sind und zweidimensionale zufällige Formen auf dem Etiketten- oder Kennzeichnungsträger aufweisen, wobei diese zweidimensionalen zufälligen Komponenten speziell so ausgelegt sind, dass sie auf dem Etiketten- oder Kennzeichnungsträger unabhängig von dem Blickwinkel sichtbar sind, und
- Positionsmarkierungen (1-2,2-3) mit geometrischen Besonderheiten,
die einen zu analysierenden Bereich lokalisieren, in dem sich die inhärenten Störfaktoren befinden,
und dass das Verfahren einen Algorithmus ausführt, der unabhängig von dem Blickwinkel das gedruckte Muster und seine zufälligen Bestandteile in dem zu analysierenden und zu lokalisierenden anhand der Positionierungsmarkierungen mit geometrischen Besonderheiten Bereich erkennt.

2. Authentifizierungsverfahren nach Anspruch 1, wobei die Störfaktoren einem Papier oder einem Kunststoff inhärent sind.

3. Authentifizierungsverfahren nach Anspruch 1 oder 2, wobei die zufälligen Komponenten des Sicherheitselements zufällig positionierte farbige Fasern umfassen.

4. Authentifizierungsverfahren nach Anspruch 1 oder 2, wobei die zufälligen Komponenten des Sicherheitselements eine spezifische chemische Lackschicht umfassen, die beim Trocknen fest wird und eine zufällige Form von zweidimensionalen Flecken annimmt, und wobei Pigmente eingeschlossen sind, die mit einem Digitaldrucker nicht reproduzierbar sind.

5. Authentifizierungsverfahren nach Anspruch 4, wobei die Pigmente fluoreszierend, mit Farben außerhalb des vierfarbigen Spektrums, reflektierend, thermochrom oder farbwechselnd sind.

6. Authentifizierungsverfahren nach Anspruch 1 oder 2, wobei die zufälligen Komponenten des Sicherheitselements eine Tinte oder Farbe umfassen, die mit statischer oder variabler Form, mit Farben außerhalb des vierfarbigen Spektrums oder außerhalb des Pantone-Spektrums, reflektierend, wechselnd sind und/oder aus einer komplexen Farbmischung resultieren, wodurch die perfekte Erkennung der Tinte oder Farbe gewährleistet wird.

7. Authentifizierungsvorrichtung, das Folgendes aufweist:
- Mittel zur Durchführung eines Authentifizierungsverfahrens nach einem der Ansprüche 1 bis 6, und
- eine Vorrichtung, die in der Lage ist, ein oder mehrere Fotos zu empfangen, die zuvor von einem Benutzer mit einem Smartphone mit oder ohne Blitz aufgenommen wurden, die eine Software, die die zufälligen Komponenten des Sicherheitselements visualisiert, umfasst, wodurch die Echtheit des Sicherheitselements erkannt werden kann, indem es fast sofort mit der Originalbeschreibung verglichen wird, die in einem Smartphone oder in einer Cloud gespeichert ist, wobei die Software entweder eine direkte Verbindung zur Cloud oder eine spezielle Chatbox-Verbindung zur Cloud hat.

8. Authentifizierungsvorrichtung nach Anspruch 7, wobei die zufälligen Komponenten des Sicherheitselements eine Tinte oder Farbe umfassen, die mit statischer oder variabler Form, mit Farben außerhalb des vierfarbigen Spektrums oder außerhalb des Pantone-Spektrums, reflektierend, wechselnd sind und/oder aus einer komplexen Farbmischung resultieren, wodurch die perfekte Erkennung der Tinte oder Farbe gewährleistet wird, und die Software in der Lage ist, die Farben der Tinte oder Farbe zu visualisieren, und bestimmt, insbesondere durch neuronale Netze zu bestimmen, ob diese Farben mit der Tinte oder Farbe der Originalbeschreibung übereinstimmen.

## Claims

1. An authentication method consisting of establishing a so-called subsequent description of an authentication device comprising one or more visible elements having a random shape and/or position and comparing this description with a so-called original description of said authentication device, wherein the security element in the form of a printed pattern on a tag or marking medium affixed to a product or to a packaging of this product simultaneously comprises:
- a unique identifier (1-3, 2-2) for the product or for a set of products or printing master on a plate of a static printer of any category that can print by rotation multiple products with the same identifier,
- random components (1-1, 2-1) formed by pattern-intrinsic disruptors, arranged in two dimensions on the tag or marking medium and with random two-dimensional forms on the tag or marking medium, these random two-dimensional components being specifically designed to be visible on the tag or marking medium regardless of the angle of picture shooting, and
- positioning markers (1-2, 2-3) with geometric specific features, locating an area to be analyzed in which the intrinsic disruptors are found,
and in that the method executes an algorithm that recognizes, independently from the picture shooting angle, the printed pattern and its random components in the area to be analyzed and localized thanks to positioning markers with geometric specific features.

2. The authentication method according to claim 1, wherein the disruptors are intrinsic to a paper or a plastic.

3. The authentication method according to claim 1 or 2, wherein the random components of the security element comprise colored fibers randomly positioned.

4. The authentication method according to claim 1 or 2, wherein the random components of the security element comprise a layer of specific chemical varnish, which solidifies and takes on, when drying, a random shape of two-dimensional stains and wherein pigments non-reproducible by a digital printer are included.

5. The authentication method according to claim 4, wherein the pigments are fluorescent, with colors outside the four-color CMYK spectrum, reflective, thermochromic, or color-changing.

6. The authentication method according to claim 1 or 2, wherein the random components of the security element comprise an ink or paint with a static or variable shape, with colors outside the four-color CMYK spectrum or outside the Pantone spectrum, reflective, changing, and/or resulting from a complex mixture of colors, all of which ensuring perfect recognition of the ink or paint.

7. An authentication device comprising:
- means for implementing an authentication method as claimed in any of claims 1 to 6, and
- a device, capable of receiving one or more photos previously taken by a user with a smartphone, with or without flash, comprising software that visualizes the random components of the security element, allowing the authenticity of said security element to be ascertained by comparing it almost instantaneously with the original description stored in a smartphone or in a cloud, wherein said software has either a direct connection to the cloud, or a connection via a "chat box" messaging service dedicated to the cloud.

8. The authentication device according to claim 7, wherein the random components of the security element comprise ink or paint in a static or variable shape, with colors outside the four-color CMYK spectrum or outside the Pantone spectrum, reflective, changing, and/or resulting from a complex mixture of colors, the whole ensuring perfect recognition of the ink or paint and the software is capable of visualizing the colors of the ink or paint and determines, in particular thanks to neural networks, whether these colors correspond to the ink or paint of the original description.
